# DEMANDE DE BREVET EUROPEEN

(11) **EP 4 387 023 A1**
(43) Date de publication de la demande: **19.06.2024**
(21) Numéro de dépôt: 22306879.2
(22) Date de dépôt: 14.12.2022
(51) Int. Cl.: H02G 7/05, H01R 4/20, H01R 11/12

(54) **PROCÉDÉ ET ENSEMBLE DE TRAITEMENT D'UN MANCHON D'ANCRAGE DE CÂBLE CONDUCTEUR, MANCHON D'ANCRAGE RÉSULTANT**

(71) Demandeur: RTE RESEAU DE TRANSPORT D'ELECTRICITE, 92073 Paris La Défense Cedex (FR)
(72) Inventeur: TRUFFET, Benoît, 92073 Paris La Défense Cedex (FR)
(74) Mandataire: Bonnet, Michel

(57) **Abrégé**

Ce procédé de traitement préventif d'un manchon tubulaire (10), d'ancrage d'une extrémité de câble conducteur d'électricité (18) à un pylône ou à une structure porteuse d'une installation de poste électrique de réseau de transport ou de distribution d'électricité, comporte l'injection (106) d'un produit de colmatage, par un conduit radial préalablement percé dans une portion longitudinale (L2) du manchon tubulaire (10) depuis l'extérieur jusqu'à un volume intérieur dans lequel s'étend l'extrémité de câble conducteur (18), dans le volume intérieur du manchon tubulaire (10). Cette injection (106) se fait (1064, 1066) sous pression jusqu'à débordement (28A) du produit de colmatage par une extrémité libre du manchon tubulaire (10), opposée à son extrémité d'ancrage, par laquelle l'extrémité de câble conducteur (18) a été introduite dans le manchon tubulaire (10).

## Description

La présente invention concerne un procédé et un ensemble de traitement préventif d'un manchon tubulaire d'ancrage d'une extrémité de câble conducteur d'électricité à un pylône ou à une structure porteuse d'une installation de poste électrique de réseau de transport ou de distribution d'électricité. Elle concerne également un manchon tubulaire d'ancrage de câble conducteur résultant d'un tel traitement préventif.

Elle s'applique en particulier mais non exclusivement à l'ancrage des câbles conducteurs permettant le transport et/ou la distribution de courant électrique à haute tension ou très haute tension par voie aérienne, dits « câbles d'énergie », ou aux câbles conducteurs dont la fonction principale n'est pas à proprement parler le transport et/ou la distribution de courant électrique mais plutôt la protection d'un réseau de transport ou de distribution d'électricité contre les effets de la foudre, dits « câbles de garde » ou « câbles de terre ». Ces câbles comportent généralement une pluralité de brins conducteurs enroulés en au moins un toron.

Un manchon d'ancrage pour ce type de câble présente généralement une extrémité d'ancrage par vissage, une extrémité libre opposée par laquelle l'extrémité de câble conducteur est introduite dans le manchon tubulaire d'ancrage et une plage de fixation de cosse de dérivation pour assurer une continuité électrique par dérivation. L'extrémité de câble conducteur introduite dans le volume intérieur du manchon tubulaire y est maintenue fermement par sertissage, c'est-à-dire par compression de portions longitudinales du manchon tubulaire et écrasement du câble conducteur qui se trouve à l'intérieur, notamment au voisinage de ses extrémités d'ancrage et d'introduction du câble conducteur. Mais ce sertissage n'empêche pas que des interstices demeurent, notamment entre les brins conducteurs en toron de l'extrémité de câble, ou entre la couche externe de brins conducteurs et la paroi tubulaire intérieure du manchon d'ancrage.

Dans certaines configurations, un manchon d'ancrage peut se trouver en position de « boit l'eau », c'est-à-dire que son extrémité libre recevant l'extrémité de câble est disposée plus haute que son extrémité d'ancrage, de sorte qu'elle peut recevoir de l'eau qui ruisselle le long du câble conducteur et peut ainsi pénétrer à l'intérieur du tube dans lequel s'étend l'extrémité de ce câble conducteur.

Il en résulte une dégradation du manchon d'ancrage à cause de plusieurs phénomènes :
- corrosion de l'acier constitutif du manchon d'ancrage par alternance d'humidité, de chaleur et d'air,
- pertes locales de contact entre le volume intérieur du manchon d'ancrage et l'extrémité de câble conducteur, ce qui provoque des échauffements et entraîne une augmentation de la résistance électrique,
- fissuration du manchon d'ancrage lors de périodes de gel si de l'eau résiduelle se trouve dans son volume intérieur et s'y transforme en glace.

Ces dégradations sont souvent détectées par des inspections thermographiques menées à distance depuis un hélicoptère et nécessitent, lorsque des températures excessives sont atteintes, un remplacement pur et simple du manchon d'ancrage.

Une solution est donc d'opérer un traitement préventif sur les manchons d'ancrage par perçage d'un conduit par lequel un produit de colmatage peut être injecté pour les rendre imperméable à l'eau.

L'invention s'applique ainsi plus particulièrement à un procédé de traitement préventif d'un manchon tubulaire d'ancrage d'une extrémité de câble conducteur d'électricité à un pylône ou à une structure porteuse d'une installation de poste électrique de réseau de transport ou de distribution d'électricité, comportant l'injection d'un produit de colmatage, par un conduit radial préalablement percé dans une portion longitudinale du manchon tubulaire depuis l'extérieur jusqu'à un volume intérieur dans lequel s'étend l'extrémité de câble conducteur, dans le volume intérieur du manchon tubulaire, entre le volume occupé par l'extrémité de câble conducteur et une paroi intérieure du manchon tubulaire.

Un tel procédé est abordé sans trop de détails dans le document de brevet CN 103490359 A qui présente simplement un manchon tubulaire d'ancrage dans lequel est percé un conduit radial, entre son extrémité d'ancrage et sa plage de fixation de cosse de dérivation, pour l'injection d'un produit de colmatage. Notamment les conditions de l'injection ne sont pas détaillées de sorte que celle-ci ne produit aucune garantie d'étanchéité.

Il peut ainsi être souhaité de prévoir un procédé de traitement préventif d'un manchon tubulaire d'ancrage qui permette de s'affranchir d'au moins une partie des problèmes et contraintes précités.

Il est donc proposé un procédé de traitement préventif d'un manchon tubulaire d'ancrage d'une extrémité de câble conducteur d'électricité à un pylône ou à une structure porteuse d'une installation de poste électrique de réseau de transport ou de distribution d'électricité, comportant l'injection d'un produit de colmatage, par un conduit radial préalablement percé dans une portion longitudinale du manchon tubulaire depuis l'extérieur jusqu'à un volume intérieur dans lequel s'étend l'extrémité de câble conducteur, dans le volume intérieur du manchon tubulaire, entre le volume occupé par l'extrémité de câble conducteur et une paroi intérieure du manchon tubulaire, dans lequel cette injection se fait sous pression jusqu'à débordement du produit de colmatage par une extrémité libre du manchon tubulaire, opposée à son extrémité d'ancrage, par laquelle l'extrémité de câble conducteur a été introduite dans le manchon tubulaire d'ancrage.

Ainsi, la surveillance du débordement de produit de colmatage par l'extrémité libre du manchon d'ancrage est un indicateur astucieux des bonnes conditions de l'injection, à savoir une pression suffisante d'injection ainsi qu'une quantité suffisante de produit injecté. Il en résulte une certaine garantie que l'intérieur du manchon d'ancrage est de cette façon imperméabilisé à l'eau, même lorsqu'il est en position de « boit l'eau ».

De façon optionnelle, l'injection de produit de colmatage se fait sous une pression supérieure ou égale à 500 bars, de préférence autour de 700 bars +/- 10%.

De façon optionnelle également, l'injection de produit de colmatage se fait sous une température supérieure ou égale à 10 °C.

De façon optionnelle également, le produit de colmatage utilisé est une graisse conductrice d'électricité.

De façon optionnelle également, un procédé de traitement préventif d'un manchon tubulaire d'ancrage selon l'invention peut comporter le perçage du conduit radial dans la portion longitudinale du manchon tubulaire depuis l'extérieur jusqu'au volume intérieur dans lequel s'étend l'extrémité de câble conducteur.

De façon optionnelle également, le perçage du conduit radial est réalisé à l'aide :
- d'un gabarit à collier de serrage muni d'un trou traversant formant guide de perçage ; et
- d'un foret à épaulement, cet épaulement venant en butée contre le gabarit à collier de serrage autour du trou traversant formant guide de perçage lors du perçage pour limiter ce dernier en profondeur.

Dans ce cas et de façon optionnelle également, un procédé de traitement préventif d'un manchon tubulaire d'ancrage selon l'invention peut comporter une étape de positionnement du gabarit à collier de serrage en butée contre une plage de fixation de cosse de dérivation du manchon d'ancrage.

Dans ce cas et de façon optionnelle également, le gabarit à collier de serrage comporte un pion de calage axial et son positionnement se fait à l'aide de ce pion de calage contre la plage de fixation pour assurer une disposition du trou traversant formant guide de perçage de l'autre côté de la plage de fixation par rapport à un placement prévu pour la cosse de dérivation.

De façon optionnelle également, la portion longitudinale du manchon tubulaire dans laquelle le conduit radial est percé est choisie selon les critères suivants :
- elle est au plus près d'une extrémité d'ancrage du manchon tubulaire tout en en étant séparée par au moins une zone de sertissage par compression ;
- elle comporte une partie de l'extrémité de câble conducteur ; et
- elle n'est pas elle-même comprimée.

De façon optionnelle également, la portion longitudinale du manchon tubulaire dans laquelle le conduit radial est percé est choisie du côté de l'extrémité d'ancrage du manchon tubulaire entre ladite au moins une zone de sertissage et une plage de fixation de cosse de dérivation du manchon d'ancrage.

De façon optionnelle également, un procédé de traitement préventif d'un manchon tubulaire d'ancrage selon l'invention peut comporter la fixation du manchon tubulaire d'ancrage au pylône ou à la structure porteuse d'installation de poste électrique et l'insertion d'une extrémité de câble conducteur dans le manchon d'ancrage avant le perçage du conduit radial et l'injection de produit de colmatage.

Il est également proposé un manchon d'ancrage d'une extrémité de câble conducteur d'électricité à un pylône ou à une structure porteuse d'une installation de poste électrique de réseau de transport ou de distribution d'électricité, comportant ladite extrémité de câble conducteur et un conduit radial préalablement percé dans une portion longitudinale du manchon tubulaire depuis l'extérieur jusqu'à un volume intérieur dans lequel s'étend l'extrémité de câble conducteur, ce manchon tubulaire comportant en outre :
- une extrémité d'ancrage au pylône ou à la structure porteuse ; et
- un produit de colmatage, injecté par le conduit radial préalablement percé, dans le volume intérieur du manchon tubulaire, entre le volume occupé par l'extrémité de câble conducteur et une paroi intérieure du manchon tubulaire ;
dans lequel le produit de colmatage injecté est présent dans le volume intérieur jusqu'à son débordement par une extrémité libre du manchon tubulaire, opposée à son extrémité d'ancrage, par laquelle l'extrémité de câble conducteur a été introduite dans le manchon tubulaire d'ancrage.

Il est également proposé un ensemble de traitement préventif d'un manchon tubulaire d'ancrage d'une extrémité de câble conducteur d'électricité à un pylône ou à une structure porteuse d'une installation de poste électrique de réseau de transport ou de distribution d'électricité, comportant :
- un manchon tubulaire d'ancrage d'une extrémité de câble conducteur d'électricité à un pylône ou à une structure porteuse d'une installation de poste électrique de réseau de transport ou de distribution d'électricité ;
- un gabarit à collier de serrage muni d'un trou traversant formant guide de perçage, fixé autour d'une portion longitudinale du manchon tubulaire ; et
- un outil de perçage comportant un foret adapté pour percer radialement le manchon tubulaire d'ancrage dans ladite portion longitudinale par introduction dans le trou traversant formant guide de perçage du gabarit à collier de serrage.

L'invention sera mieux comprise à l'aide de la description qui va suivre, donnée uniquement à titre d'exemple et faite en se référant aux dessins annexés dans lesquels :
- la figure 1 représente schématiquement en coupe longitudinale la structure générale d'un exemple connu de manchon tubulaire d'ancrage d'une extrémité de câble conducteur d'électricité à une structure porteuse,
- la figure 2 représente schématiquement en coupe longitudinale la structure générale du manchon tubulaire d'ancrage de la figure 1 après traitement préventif, selon un mode de réalisation de l'invention,
- la figure 3 illustre les étapes successives d'un procédé de traitement préventif du manchon tubulaire d'ancrage de la figure 1, selon un mode de réalisation de l'invention,
- la figure 4 représente schématiquement en perspective la structure générale d'un ensemble de traitement préventif du manchon tubulaire d'ancrage de la figure 1,
- la figure 5 représente schématiquement en perspective la structure générale d'un gabarit à collier de serrage de l'ensemble de traitement préventif de la figure 4,
- la figure 6 est une vue de dessous en légère perspective du gabarit à collier de serrage de la figure 5 lorsqu'il est disposé autour du manchon tubulaire d'ancrage de la figure 1,
- la figure 7 est une vue de profil d'un exemple de foret à épaulement pour l'ensemble de traitement préventif de la figure 4, et
- la figure 8 est une vue de profil d'un exemple d'embout d'injecteur auto-taraudant pouvant être utilisé pour l'exécution du procédé de traitement préventif de la figure 3.

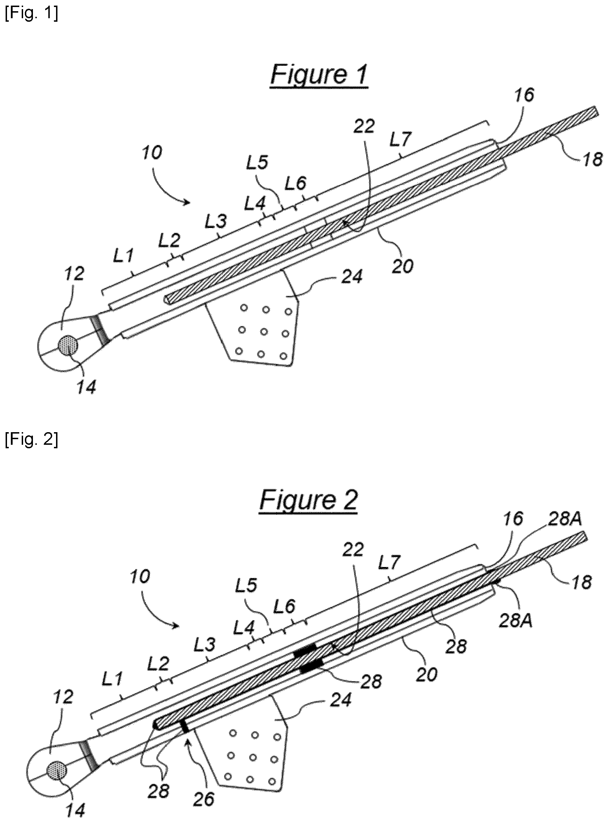

Le manchon tubulaire d'ancrage 10 représenté schématiquement en coupe longitudinale sur la figure 1 est un exemple de manchon d'ancrage utilisé pour la fixation sécurisée d'une extrémité de câble conducteur de ligne à haute ou très haute tension sur une structure porteuse, par exemple un pylône ou une structure porteuse d'une installation de poste électrique de réseau de transport ou de distribution d'électricité.

Ce manchon d'ancrage 10 comporte une première extrémité 12 d'ancrage à un axe porteur 14 de la structure porteuse (non illustrée) et une deuxième extrémité libre 16, opposée à l'extrémité d'ancrage 12, d'introduction d'une extrémité de câble conducteur 18 de ligne à haute ou très haute tension. Entre ses deux extrémités 12 et 16, le manchon d'ancrage 10 présente un corps principal 20 de forme essentiellement cylindrique tubulaire dont l'alésage longitudinal 22 est de dimensions adaptées pour recevoir l'extrémité de câble conducteur 18. Notamment l'alésage 22 s'étend sur presque toute la longueur du corps principal 20 du manchon d'ancrage 10, c'est-à-dire jusqu'à un certain voisinage de son extrémité d'ancrage 12, et est de diamètre correspondant à celui du câble conducteur 18, avec un certain jeu permettant d'introduire ce dernier sans trop de contraintes.

Ainsi, sur la figure 1, le manchon d'ancrage 10 est représenté fixé à l'axe porteur 14 et avec l'extrémité de câble conducteur 18 complètement intégrée dans son alésage 22, c'est-à-dire en butée contre le fond de cet alésage 22.

De façon connue en soi, le manchon d'ancrage 10 comporte une plage 24 de fixation d'une cosse de dérivation (non illustrée). Cette plage de fixation 24 s'étend radialement à partir du corps principal 20 sur une portion de sa longueur et se présente sous la forme d'une plaque trouée, par exemple de neuf trous traversants, pour la fixation par boulonnage, à l'aide ici par exemple de neuf boulons, d'une contre-plaque correspondante de la cosse de dérivation.

De l'extrémité d'ancrage 12 jusqu'à l'extrémité libre 16, le corps principal 20 du manchon d'ancrage 10 présente plusieurs portions longitudinales successives.

Une première portion de longueur L1 s'étend depuis l'extrémité d'ancrage 12 et comporte le fond de l'alésage 22, et donc l'extrémité de câble conducteur 18, sur une certaine longueur. En disposition fixée du manchon d'ancrage 10 et de l'extrémité de câble conducteur 18 qu'il contient, cette première portion de longueur L1 est comprimée par un premier sertissage puissant assurant l'ancrage sécurisé de l'extrémité de câble conducteur 18.

Une deuxième portion de longueur L2 s'étend à partir de la première portion de longueur L1 jusqu'à un premier côté de la plage de fixation 24. Elle n'est pas sertie. C'est même la portion longitudinale non sertie du corps principal 20 du manchon d'ancrage 10 la plus proche de l'extrémité d'ancrage 12. On notera que cette deuxième portion de longueur L2 est au plus près de l'extrémité d'ancrage 12 tout en en étant séparée par la première portion le longueur L1 sertie par compression. Elle comporte l'extrémité de câble conducteur 18. Elle n'est pas elle-même sertie par compression. Elle est en outre du côté de l'extrémité d'ancrage 12 entre la première portion le longueur L1 sertie par compression et la plage de fixation 24.

Une troisième portion de longueur L3 s'étend à partir de la deuxième portion de longueur L2 jusqu'à un deuxième côté de la plage de fixation 24. Cette troisième portion de longueur L3 représente donc l'encombrement longitudinal de la plage de fixation 24.

Une quatrième portion de longueur L4 s'étend à partir de la troisième portion de longueur L3, c'est-à-dire à partir du deuxième côté de la plage de fixation 24, sur une certaine longueur par exemple égale à celle de la deuxième portion de longueur L2. Elle n'est pas non plus sertie.

Une cinquième portion de longueur L5 s'étend à partir de la quatrième portion de longueur L4 jusqu'à une sixième portion de longueur L6 et de plus large diamètre à l'intérieur du corps principal 20 du manchon d'ancrage 10, la sixième portion de longueur L6 formant ainsi un volume enclavé annulaire dans le corps principal 20 dans lequel l'extrémité de câble conducteur 18 est à nu. En disposition fixée du manchon d'ancrage 10 et de l'extrémité de câble conducteur 18 qu'il contient, la cinquième portion de longueur L5 est comprimée par un deuxième sertissage puissant assurant l'ancrage sécurisé de l'extrémité de câble conducteur 18. La sixième portion de longueur L6 n'est quant à elle pas sertie.

Enfin, une septième portion de longueur L7 s'étend à partir de la sixième portion de longueur L6 jusqu'à l'extrémité libre 16. En disposition fixée du manchon d'ancrage 10 et de l'extrémité de câble conducteur 18 qu'il contient, cette septième portion de longueur L7 est comprimée par un troisième sertissage puissant assurant l'ancrage sécurisé de l'extrémité de câble conducteur 18.

La figure 1 illustre le manchon d'ancrage 10 en disposition de « boit l'eau », son extrémité libre 16 étant à une altitude supérieure à celle de son extrémité d'ancrage 12. On comprend aisément qu'une goutte d'eau atterrissant sur l'extrémité de câble conducteur 18 à l'extérieur du manchon d'ancrage 10 peut malgré tout glisser et s'introduire partiellement dans l'alésage 22, même si le sertissage de la septième portion de longueur L7 limite une telle intrusion.

Le manchon tubulaire d'ancrage 10 est représenté schématiquement en coupe longitudinale sur la figure 2 après un traitement préventif conforme aux principes généraux de la présente invention.

II comporte ainsi, contrairement à sa représentation de la figure 1, un conduit radial 26 percé dans la deuxième portion de longueur L2 du corps principal 20 du manchon d'ancrage 10, depuis l'extérieur jusqu'au volume intérieur créé par l'alésage 22 dans lequel s'étend l'extrémité de câble conducteur 18. Le conduit radial 26 est percé postérieurement à l'installation et à la fixation du manchon d'ancrage 10 et de l'extrémité de câble conducteur 18 qu'il contient autour de l'axe porteur 14.

Le manchon tubulaire d'ancrage 10 comporte en outre un produit de colmatage 28, injecté par le conduit radial 26 préalablement percé, dans le volume intérieur du manchon tubulaire 10, entre le volume occupé par l'extrémité de câble conducteur 18 et la paroi intérieure formée par l'alésage 22 dans le corps principal 20. Plus précisément et conformément aux principes généraux de la présente invention, le produit de colmatage injecté 28 est présent dans le volume intérieur précité jusqu'à son débordement 28A par l'extrémité libre 16 par laquelle l'extrémité de câble conducteur 18 a été introduite dans le manchon d'ancrage 10. Pour qu'un tel débordement 28A de produit de colmatage 28 se produise, il faut que l'injection ait été menée avec suffisamment de pression, avec une quantité suffisante de produit de colmatage 28 et pendant un temps d'injection suffisant. Dans ce cas, tout le volume intérieur précité est rempli de produit de colmatage 28, incluant le conduit radial 26, le fond de l'alésage 20, tout interstice entre les brins en toron de l'extrémité de câble conducteur 18 dans l'alésage 20, entre eux et entre les brins et les parois de l'alésage 20, ainsi que le volume enclavé de la sixième portion de longueur L6 dans lequel l'extrémité de câble conducteur 18 est à nu. Il n'y a plus aucune place pour la moindre goutte d'eau, de sorte que l'on peut être assuré de l'étanchéité du manchon d'ancrage 10.

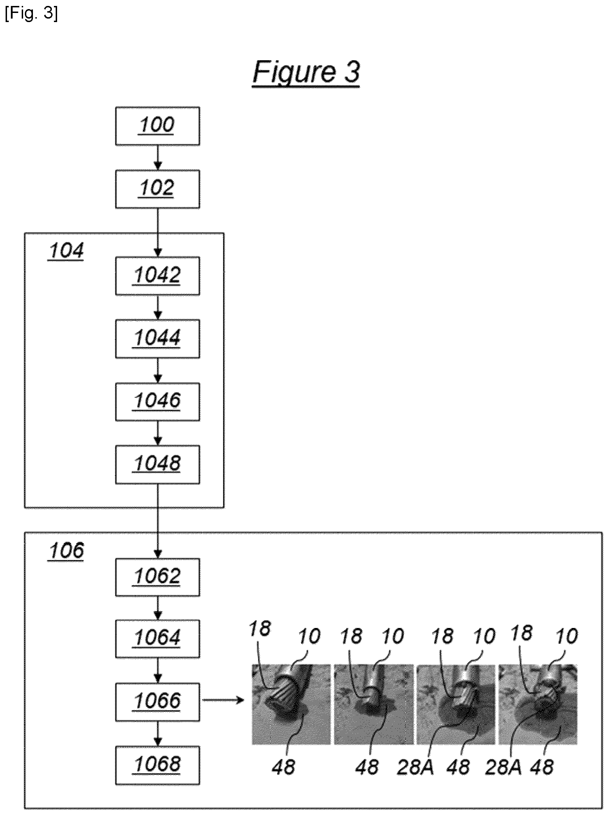

Un procédé de traitement préventif permettant de parvenir au résultat de la figure 2 à partir du manchon d'ancrage 10 de la figure 1 va maintenant être détaillé en référence à la figure 3.

Au cours d'une première étape d'installation 100, le manchon d'ancrage 10 tel qu'il se présente sur la figure 1, c'est-à-dire sans conduit radial 26 et sans produit de colmatage 28, est fixé autour de l'axe porteur 14 d'une structure porteuse telle qu'une extrémité de réception de câble conducteur d'un pylône ou d'une structure porteuse d'installation de poste électrique.

Au cours d'une étape d'ancrage 102, l'extrémité de câble conducteur 10 est insérée jusqu'au fond de l'alésage 20 à partir de l'extrémité libre 16. Elle est alors fermement maintenue dans le manchon d'ancrage 10 par sertissage des trois portions le longueurs L1, L5 et L7 qui sont ainsi comprimées. Pour assurer une continuité électrique, une cosse de dérivation peut être fixée par boulonnage à la plage de fixation 24 lors de cette étape pour connecter électriquement l'extrémité de câble conducteur 10 à un autre câble de dérivation.

Au cours d'une étape suivante 104, qui peut être éloignée dans le temps des deux premières étapes, mais doit être exécutée avant que le manchon d'ancrage 10 ne soit trop endommagé par des intempéries, le conduit radial 26 représenté sur la figure 2 est percé dans la deuxième portion de longueur L2 depuis l'extérieur du manchon d'ancrage 10 jusqu'au volume intérieur de l'alésage 20 dans lequel s'étend l'extrémité de câble conducteur 10.

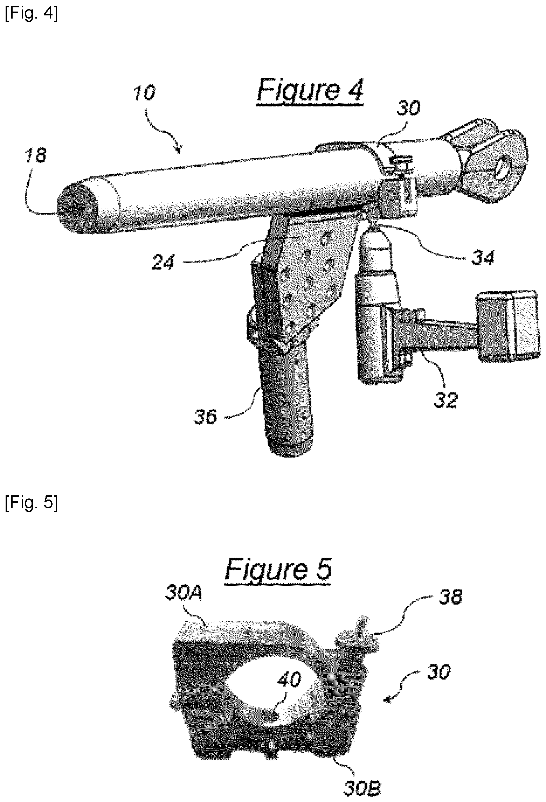

Cela peut se faire avantageusement par montage de l'ensemble de traitement préventif tel qu'illustré sur la figure 4.

Cet ensemble comporte :
- le manchon d'ancrage 10 dans lequel est introduit l'extrémité de câble conducteur 18 (tronquée sur la figure 4),
- un gabarit à collier de serrage 30 muni d'un trou traversant (non visible sur la figure 4) formant guide de perçage, fixé autour d'une portion longitudinale du manchon d'ancrage 10, par exemple avantageusement autour de la deuxième portion de longueur L2,
- un outil de perçage 32 comportant un foret 34 adapté pour percer radialement le manchon d'ancrage 10 dans la portion longitudinale autour de laquelle est fixé le gabarit à collier de serrage 30 par introduction dans le trou traversant formant guide de perçage.

Accessoirement, la figure 4 illustre une cosse de dérivation 36 fixée par boulonnage sur un côté de la plage de fixation 24

Ainsi, au cours d'une sous-étape 1042 de l'étape 104, le gabarit à collier de serrage 30 est monté autour du manchon d'ancrage 10 dans sa deuxième portion de longueur L2. Il est par exemple positionné longitudinalement en butée contre le premier côté de la plage de fixation 24.

Le gabarit à collier de serrage 30 est illustré plus précisément en perspective sur la figure 5. Il se présente sous la forme d'une mâchoire à deux mors 30A et 30B semi-circulaires de dimensions correspondant au diamètre extérieur du manchon d'ancrage 10. Ces deux mors sont refermables par boulonnage 38, notamment à l'aide d'un écrou moleté, et l'un des deux comporte le trou traversant 40 formant guide de perçage.

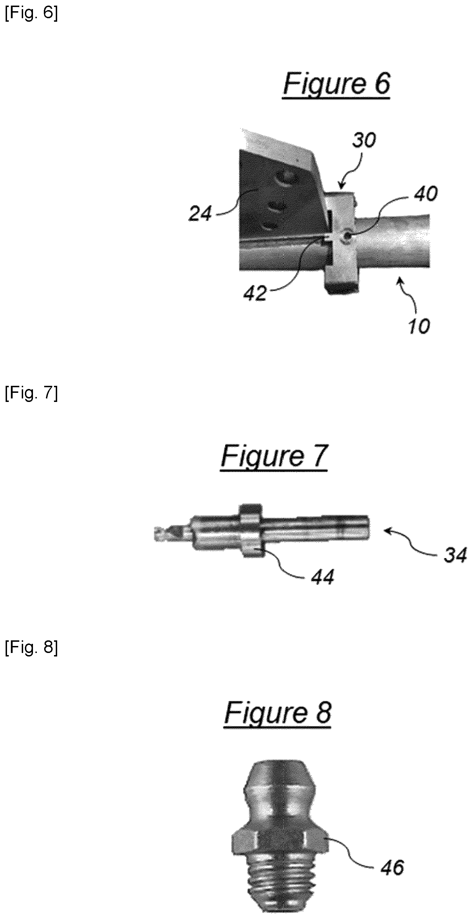

Pour son positionnement axial autour du premier côté de la page de fixation 24 lors d'une sous-étape 1044 de l'étape 104, le gabarit à collier de serrage 30 comporte un pion de calage axial 42 visible sur la vue de dessous en légère perspective de la figure 6. Ce pion 42 permet de caler axialement le trou traversant 40 formant guide de perçage, notamment pour le positionner de l'autre côté de la plage de fixation 24 par rapport au placement prévu pour la cosse de dérivation 36. Cela permet de disposer de plus de place pour le perçage.

Au cours d'une sous-étape 1046 suivante de l'étape 104, le gabarit à collier de serrage 30 est fixé par vissage autour du manchon d'ancrage 10.

Ensuite, lors d'une sous-étape 1048 de l'étape 104, le conduit radial 26 est percé dans la deuxième portion de longueur L2 à l'endroit précisément défini par le trou traversant 40 formant guide de perçage. Ce perçage est réalisé à l'aide de l'outil 32, par exemple une perceuse conventionnelle, et du foret 34 qui est illustré sur la figure 7. Il s'agit d'un foret à épaulement 44 et à angle de pointe plat, cet épaulement venant en butée contre le gabarit à collier de serrage 30 autour du trou traversant 40 formant guide de perçage lors du perçage pour limiter ce dernier de façon très précise en profondeur. Notamment cela permet de percer le manchon d'ancrage 10 dans toute son épaisseur et d'atteindre l'alésage 22 sans affecter l'extrémité de câble conducteur 18 grâce, en outre, à l'angle de pointe plat. Le perçage peur s'opérer en plusieurs fois pour permettre aux copeaux de s'évacuer. De l'eau résiduelle à l'intérieur du manchon d'ancrage 10 peut s'évacuer lorsque le perçage est terminé.

Au cours d'une étape suivante 106, un produit de colmatage 28, par exemple une graisse conductrice d'électricité, est injecté par le conduit radial 26 préalablement percé dans le volume intérieur du manchon d'ancrage 10, entre le volume occupé par l'extrémité de câble conducteur 18 et la paroi intérieure du manchon tubulaire 10 formée par son alésage 22.

Lors d'une sous-étape 1062 de l'étape 106, un embout d'injecteur auto-taraudant 46 tel que celui illustré sur la figure 8 est vissé dans le conduit radial 26. Un dispositif d'injection complet et conventionnel est raccordé à cet embout, par exemple une simple pompe à graisse munie d'une cartouche de graisse conductrice sans corindon.

Au cours d'une sous-étape 1064 suivante de l'étape 106, le produit de colmatage commence à être injecté progressivement, sous une pression avantageusement supérieure ou égale à 500 bars, et même de préférence autour de 700 bars +/- 10%. La température sous laquelle s'opère cette injection est elle-même de préférence supérieure ou égale à 10 °C pour assurer une viscosité suffisamment faible du produit de colmatage lorsqu'il s'agit d'une graisse conductrice.

Au cours d'une sous-étape 1066 suivante de l'étape 106, l'injection progressive est surveillée tout en se poursuivant. Elle provoque tout d'abord une sortie d'eau 48 si de l'eau résiduelle se trouvait déjà dans le volume intérieur du manchon d'ancrage 10. Cette eau 48 continue à sortir et se répandre à l'extérieur tant que le volume intérieur du manchon d'ancrage 10, entre le volume occupé par l'extrémité de câble conducteur 18 et la paroi intérieure de l'alésage 20, n'est pas totalement occupé par le produit de colmatage 28. La fin de l'injection se détecte dès lors que le produit de colmatage 28 commence à sortir par l'extrémité libre 16, ce qui provoque l'apparition d'un débordement 28A. L'injection 1066 peut malgré tout se poursuivre encore quelques temps, par exemple une trentaine de secondes, avant d'être stoppée. Il peut alors être considéré que le résultat illustré sur la figure 2 est atteint par saturation du volume intérieur du manchon d'ancrage 10.

Enfin, au cours d'une dernière sous-étape 1068 de l'étape 106, le conduit radial 26 peut être bouché à l'aide d'un capuchon.

Il apparaît clairement qu'un procédé de traitement préventif d'un manchon d'ancrage tel que celui décrit précédemment permet de le rendre étanche de façon simple et avec une garantie de résultat. Cela permet en outre de prolonger sa durée de vie en évitant un remplacement lourd et coûteux.

On notera par ailleurs que l'invention n'est pas limitée au mode de réalisation décrit précédemment.

Ainsi par exemple, le conduit radial 26 pourrait être prévu dans le manchon d'ancrage 10 avant son installation avec l'extrémité de câble conducteur 18 et sa fixation sur une structure porteuse, ce qui permettrait d'éviter l'étape 104.

Il apparaîtra plus généralement à l'homme de l'art que diverses modifications peuvent être apportées au mode de réalisation décrit ci-dessus, à la lumière de l'enseignement qui vient de lui être divulgué. Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Procédé de traitement préventif d'un manchon tubulaire (10) d'ancrage d'une extrémité de câble conducteur d'électricité (18) à un pylône ou à une structure porteuse d'une installation de poste électrique de réseau de transport ou de distribution d'électricité, comportant l'injection (106) d'un produit de colmatage (28), par un conduit radial (26) préalablement percé dans une portion longitudinale (L2) du manchon tubulaire (10) depuis l'extérieur jusqu'à un volume intérieur dans lequel s'étend l'extrémité de câble conducteur (18), dans le volume intérieur du manchon tubulaire (10), entre le volume occupé par l'extrémité de câble conducteur (18) et une paroi intérieure (22) du manchon tubulaire (10), **caractérisé en ce que** cette injection (106) se fait (1064, 1066) sous pression jusqu'à débordement (28A) du produit de colmatage (28) par une extrémité libre (16) du manchon tubulaire (10), opposée à son extrémité d'ancrage (12), par laquelle l'extrémité de câble conducteur (18) a été introduite dans le manchon tubulaire d'ancrage (10).

2. Procédé de traitement préventif d'un manchon tubulaire d'ancrage (10) selon la revendication 1, dans lequel l'injection (106) de produit de colmatage (28) se fait (1064, 1066) sous une pression supérieure ou égale à 500 bars, de préférence autour de 700 bars +/- 10%.

3. Procédé de traitement préventif d'un manchon tubulaire d'ancrage (10) selon la revendication 1 ou 2, dans lequel l'injection (106) de produit de colmatage (28) se fait (1064, 1066) sous une température supérieure ou égale à 10 °C.

4. Procédé de traitement préventif d'un manchon tubulaire d'ancrage (10) selon l'une quelconque des revendications 1 à 3, dans lequel le produit de colmatage (28) utilisé est une graisse conductrice d'électricité.

5. Procédé de traitement préventif d'un manchon tubulaire d'ancrage (10) selon l'une quelconque des revendications 1 à 4, comportant le perçage (104) du conduit radial (26) dans la portion longitudinale (L2) du manchon tubulaire (10) depuis l'extérieur jusqu'au volume intérieur dans lequel s'étend l'extrémité de câble conducteur (18).

6. Procédé de traitement préventif d'un manchon tubulaire d'ancrage (10) selon la revendication 5, dans lequel le perçage (104) du conduit radial est réalisé (1048) à l'aide :
- d'un gabarit à collier de serrage (30) muni d'un trou traversant (40) formant guide de perçage ; et
- d'un foret (34) à épaulement (44), cet épaulement (44) venant en butée contre le gabarit à collier de serrage (30) autour du trou traversant (40) formant guide de perçage lors du perçage (104) pour limiter ce dernier en profondeur.

7. Procédé de traitement préventif d'un manchon tubulaire d'ancrage (10) selon la revendication 6, comportant une étape (1042, 1044) de positionnement du gabarit à collier de serrage (30) en butée contre une plage (24) de fixation de cosse de dérivation (36) du manchon d'ancrage (10).

8. Procédé de traitement préventif d'un manchon tubulaire d'ancrage (10) selon la revendication 7, dans lequel le gabarit à collier de serrage (30) comporte un pion de calage axial (42) et son positionnement (1042, 1044) se fait à l'aide de ce pion de calage (42) contre la plage de fixation (24) pour assurer (1044) une disposition du trou traversant (40) formant guide de perçage de l'autre côté de la plage de fixation (24) par rapport à un placement prévu pour la cosse de dérivation (36).

9. Procédé de traitement préventif d'un manchon tubulaire d'ancrage (10) selon l'une quelconque des revendications 5 à 8, dans lequel la portion longitudinale (L2) du manchon tubulaire (10) dans laquelle le conduit radial (26) est percé est choisie selon les critères suivants :
- elle est au plus près d'une extrémité d'ancrage (12) du manchon tubulaire (10) tout en en étant séparée par au moins une zone (L1) de sertissage par compression ;
- elle comporte une partie de l'extrémité de câble conducteur (18) ; et
- elle n'est pas elle-même comprimée.

10. Procédé de traitement préventif d'un manchon tubulaire d'ancrage (10) selon la revendication 9, dans lequel la portion longitudinale (L2) du manchon tubulaire (10) dans laquelle le conduit radial (26) est percé (1048) est choisie du côté de l'extrémité d'ancrage (12) du manchon tubulaire (10) entre ladite au moins une zone de sertissage (L1) et une plage (24) de fixation de cosse de dérivation (36) du manchon d'ancrage (10).

11. Procédé de traitement préventif d'un manchon tubulaire d'ancrage (10) selon l'une quelconque des revendications 5 à 10, comportant la fixation (100) du manchon tubulaire (10) d'ancrage au pylône ou à la structure porteuse d'installation de poste électrique et l'insertion (102) d'une extrémité de câble conducteur (18) dans le manchon d'ancrage (10) avant le perçage (104) du conduit radial (26) et l'injection (106) de produit de colmatage.

12. Manchon tubulaire (10) d'ancrage d'une extrémité de câble conducteur d'électricité (18) à un pylône ou à une structure porteuse d'une installation de poste électrique de réseau de transport ou de distribution d'électricité, comportant ladite extrémité de câble conducteur (18) et un conduit radial (26) préalablement percé dans une portion longitudinale (L2) du manchon tubulaire (10) depuis l'extérieur jusqu'à un volume intérieur dans lequel s'étend l'extrémité de câble conducteur (18), ce manchon tubulaire (10) comportant en outre :
- une extrémité (12) d'ancrage au pylône ou à la structure porteuse ; et
- un produit de colmatage (28), injecté par le conduit radial (26) préalablement percé, dans le volume intérieur du manchon tubulaire (10), entre le volume occupé par l'extrémité de câble conducteur (18) et une paroi intérieure (20) du manchon tubulaire (10) ;
**caractérisé en ce que** le produit de colmatage injecté (28) est présent dans le volume intérieur jusqu'à son débordement (28A) par une extrémité libre (16) du manchon tubulaire (10), opposée à son extrémité d'ancrage (12), par laquelle l'extrémité de câble conducteur (18) a été introduite dans le manchon tubulaire d'ancrage (10).

13. Ensemble de traitement préventif d'un manchon tubulaire (10) d'ancrage d'une extrémité de câble conducteur d'électricité (18) à un pylône ou à une structure porteuse d'une installation de poste électrique de réseau de transport ou de distribution d'électricité, comportant :
- un manchon tubulaire (10) d'ancrage d'une extrémité de câble conducteur d'électricité (18) à un pylône ou à une structure porteuse d'une installation de poste électrique de réseau de transport ou de distribution d'électricité ;
- un gabarit à collier de serrage (30) muni d'un trou traversant (40) formant guide de perçage, fixé autour d'une portion longitudinale (L2) du manchon tubulaire (10) ; et
- un outil de perçage (32) comportant un foret (34) adapté pour percer radialement le manchon tubulaire d'ancrage (10) dans ladite portion longitudinale (L2) par introduction dans le trou traversant (40) formant guide de perçage du gabarit à collier de serrage (30).
